# EUROPÄISCHE PATENTSCHRIFT

(11) **EP 0 474 681 B1**
(45) Veröffentlichungstag und Bekanntmachung des Hinweises auf die Patenterteilung: **05.01.1994**
(21) Anmeldenummer: 90908205.9
(22) Anmeldetag: 23.05.1990
(51) Int. Cl.: C10B 21/20

(54) **BEHEIZUNGSSYSTEM FÜR REGENERATIVVERKOKUNGSÖFEN**
HEATING SYSTEM FOR REGENERATIVE COKE OVENS
SYSTEME DE CHAUFFAGE POUR FOURS A REGENERATION A CHAMBRES

(30) Priorität: 26.05.1989 DE 3917122
(43) Veröffentlichungstag der Anmeldung: 18.03.1992
(73) Patentinhaber: Thyssen Still Otto Anlagentechnik GmbH, 44789 Bochum (DE); Krupp Koppers GmbH, 45143 Essen (DE)
(72) Erfinder: BLASE, Manfred, D-4300 Essen 16 (DE); KOCHANSKI, Ulrich, D-4630 Bochum 1 (DE); WAGENER, Dietrich, D-4300 Essen 16 (DE); MEYER, Günther, D-4300 Essen (DE); DÜRSELEN, Heinz, D-5620 Velbert (DE); STALHERM, Dieter, D-4350 Recklinghausen (DE); HOITZ, Joachim, D-4352 Herten (DE); OFFERMANN, Ludwig, D-4716 Olfen (DE); TIETZE, Jürgen, D-4630 Bochum 1 (DE)
(74) Vertreter: Dahlkamp, Heinrich-Leo, Dipl.-Ing.
(86) Internationale Anmeldenummer: EP9000838
(87) Internationale Veröffentlichungsnummer: WO9014408

(56) Entgegenhaltungen:
- EP-A- 0 183 908
- DE-A- 1 671 348
- DE-A- 2 711 883
- DE-B- 1 250 405
- US-A- 3 431 178

## Beschreibung

Die Erfindung bezieht sich auf ein Beheizungssystem gemäß Oberbegriff des Anspruches 1.

Aus der europäischen Patentanmeldung 0 183 908 ist ein Beheizungssystem mit paarweise zusammenarbeitenden Heizzügen, hoch und tief liegenden Luftzuführungsstufen sowie einer Rauchgasrückführung in Höhe der Heizzugsohle bekannt. Bei diesen nur zwei Luftzuführungsstufen über der Höhe des Heizzuges bildet die Zufuhr von Luft und Gas an der Sohle jedes Heizzuges die erste Stufe und die Zufuhr über Hohlbinderkanäle und auf gleicher Höhe zu beiden benachbarten Heizzügen liegende Austrittsschlitze die zweite Stufe. Die Beheizung mit nur zwei Luftzuführungsstufen ist dabei in Hinblick auf eine optimale Verbrennung und Minimierung der NOx-Bildung bei Verkokungsöfen mit z. B. mehr als 4 m Kammerhöhe nicht ausreichend.

Die DE-A-1 671 348 beschreibt ein Verfahren und eine Vorrichtung zur regenerativen Beheizung der Heizwände von horizontalen Verkokungsöfen mit halbgeteilten Öfen und stufenweiser Zuführung von Luft und Schwachgas zu den Heizzügen. Dabei können die Heizzüge jeder einzelnen Heizwand sowohl in ihrem Unterteil wie in ihrem oberen Abschnitt unabhängig voneinander mit Schwachgas und Verbrennungsluft beaufschlagt werden.

Aufgabe des erfindungsgemäßen Beheizungssystem ist es nun, auch bei größerer Ofenhöhe eine gleichmäßige Beheizung der Ofenkammern bei möglichst geringer NOx-Bildung zu erreichen, wobei auch eine optimale Regelung jeder einzelnen Verbrennungsstufe auch während des laufenden Betriebes insbesondere nach einem Wechsel der Gasart möglich ist.

Zur Lösung dieser Aufgabe wird ein Beheizungssystem vorgeschlagen, das durch die Kombination der im Patentanspruch 1 angegebenen Merkmale a) bis e) gekennzeichnet ist. Dieses neue Beheizungssystem zeichnet sich insbesondere dadurch aus, daß die Menge der in drei oder mehr Höhenstufen zugeführten Verbrennungsluft für jede einzelne Stufe auch während des laufenden Betriebes von außen eingestellt werden kann. Die drei- oder mehrstufige Luftzufuhr ermöglicht sowohl eine mehrstufige Verbrennung zur Beheizung der Ofenkammern über die Höhe als auch zur Verringerung der Stickoxidbildung eine unterstöchiometrische Verbrennung in den unteren Verbrennungszonen des Heizzuges sowie niedrigere Flammentemperaturen. Die Kreisstromöffnungen sollen erfindungsgemäß in den Binderwänden angeordnet sein, die sich zwischen auf- und abziehenden Heizzügen einer Zwillingszuggruppe befinden. Gleichzeitig wird neben der stufenweisen Zuführung der Verbrennungsluft mit der Rauchgasrückführung eine weitere Möglichkeit zur Verringerung der Stickoxidemissionen ausgeschöpft.

Neben der inneren Rückführung mit den sogenannten Kreisstromöffnungen wird erfindungsgemäß die Rückführung vergleichsweise kalter Rauchgase aus dem Schornsteinkanal und deren Zumischung zur Verbrennungsluft als externe Rauchgasrückführung vorgeschlagen. Dabei kann insbesondere das rückgeführte Rauchgas der Verbrennungsluft zugemischt und gemeinsam mit dieser in den Regeneratoren auf die Vorwärmtemperatur erhitzt werden.

In Hinblick auf eine optimale Verbrennungsführung in den aufbrennenden Heizzügen wird erfindungsgemäß vorgeschlagen, daß die während einer Beheizungsperiode beaufschlagen Starkgasdüsen in Ofenlängsrichtung in einer Ebene in der Nähe der einen Läuferwand vor den zugehörigen Kreisstromöffnungen und die während der anderen Beheizungsperiode beaufschlagten Starkgasdüsen ebenfalls in Ofenlängsrichtung in einer Ebene in der Nähe der anderen Läuferwand vor den zugehörigen Kreisstromöffnungen angeordnet sind.

Es hat sich weiterhin als günstig erwiesen, zur Zuführung des Schwachgases bzw. Mischgases in jedem Heizzug nur eine Austrittsöffnung an der Heizzugsohle anzuordnen, die an einen Schwachgas bzw. Mischgas führenden Regenerator angeschlossen ist. In Hinblick darauf, daß dieses Gas in der Regel mit längerer Flamme verbrennt, kann mit dieser ausschließlichen Zuführung des Gases an der Heizzugsohle auch bei höheren Kammern eine ausreichende Erwärmung des Ofenbesatzes erreicht werden. Die Austrittsöffnungen an der Heizzugsohle sowohl für die Luft als auch gegebenenfalls für das Schwachgas bzw. Mischgas sind zweckmäßig genau in der Mitte des Heizzuges zwischen den beiden zugehörigen Läuferwänden angeordnet.

Zur Einstellung der Menge der Verbrennungsmedien über der Länge der Regeneratoren sind unter diesen bzw. oberhalb der Regeneratorsohlkanäle einstellbare und/oder auswechselbare Regulierbleche angeordnet. Daneben sind die einzelnen Regeneratoren durch in Batterielängsrichtung verlaufende Zellenwände in Abschnitte unterteilt, die mit jeweils einem Heizzug in den beiden benachbarten Heizwänden verbunden sind. Hierdurch bildet jeder Zwillingsheizzug mit seinem zugehörigen Regeneratorabschnitt eine Beheizungseinheit, so daß die Zufuhr von Verbrennungsluft und Schwachgas bzw. Mischgas zu jeder einzelnen Beheizungseinheit eingestellt werden kann.

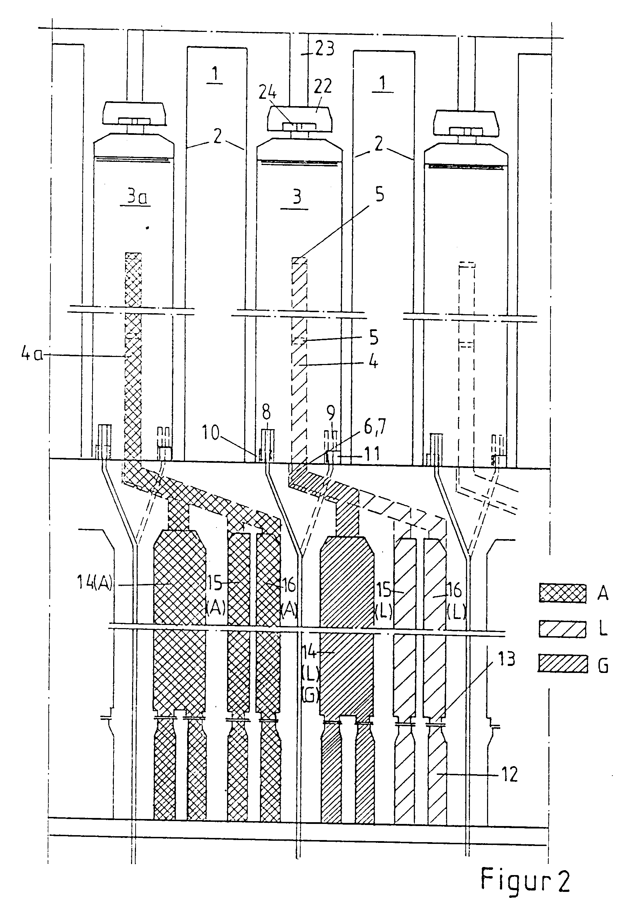

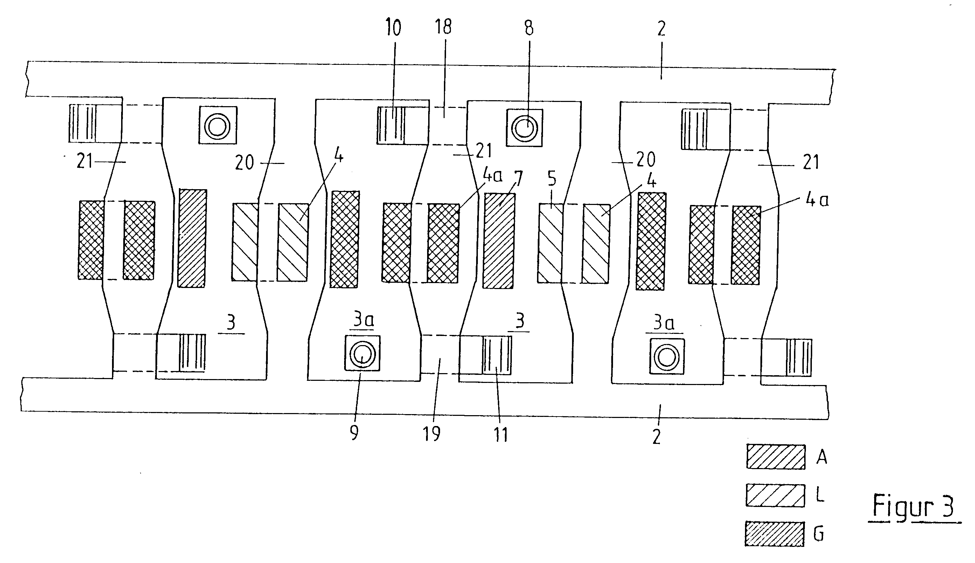

In den beigefügten Figuren 1 bis 4 ist das erfindungsgemäße Beheizungssystem beispielsweise näher erläutert.
- Figur 1: zeigt einen senkrechten Schnitt in Heizwandlängsrichtung durch einen Teil einer Heizwand mit zwei benachbarten Zwillingszuggruppen.
- Figur 2: zeigt einen senkrechten Schnitt in Batterielängsrichtung durch einige Heizwände mit zugehörigen Ofenkammern und Regeneratoren.
- Figur 3: zeigt einen waagerechten Schnitt durch einen Teil einer Heizwand.
- Figur 4: zeigt einen waagerechten Schnitt durch einen Teil mehrerer nebeneinander liegender Heizwände mit schematisch angedeuteten zugehörigen Regeneratoren und den Zuführungskanälen zu den Heizwänden.

In den Figuren ist ein sogenannter Verbundofen dargestellt, der wahlweise mit Starkgas oder Schwachgas bzw. Mischgas beheizt werden kann. Für den reinen Starkgasbetrieb wird das Starkgas wechselweise über die Starkgasdüsen (8) oder (9) den aufbrennenden Heizzügen (3) zugeführt. Die Verbrennungsluft wird über die Regeneratorsohlkanäle (12), die Regulierbleche (13), die Regeneratoren (14, 15, 16) und die Austrittsöffnungen (5 bis 7) ebenfalls in die aufziehenden Heizzüge geleitet. Dabei gelangt die Luft aus dem Regenerator (14) über die Austrittsöffnungen (7) an der Heizzugsohle, die Luft aus dem Regenerator (15) über die Austrittsöffnung (6) an der Heizzugsohle und die Luft aus dem Regenerator (16) über die Hohlbinderkanäle (4) und die beiden oberen Austrittsöffnungen (5) in den aufziehenden Heizzug (3).

Zwei benachbarte auf- und abziehende Heizzüge (3, 3a) werden beheizungsmäßig jeweils zu einem Zwillingszug zusammengefaßt, von denen der eine im Wechsel mit dem anderen beflammt (aufziehend) ist bzw. dessen Abgase abführt (abziehend).

Bei Schwachgasbeheizung wird ein Schwachgas bzw. ein Mischgas aus Hochofengas und Koksofengas in den Regeneratoren (14) vorgewärmt und über die Austrittsöffnung (7) der Heizzugsohle zugeführt. Für die Zuführung der Verbrennungsluft sind in jedem Heizzug mindestens drei Öffnungen in verschiedenen Höhen vorgesehen: eine Austrittsöffnung (6) liegt an der Heizzugsohle und zwei oder mehr (5) an einer Binderwand (20, 21) in verschiedenen Höhen. Um eine Anpassung der Verbrennungsluftzufuhr in den einzelnen Stufen an die Erfordernisse des Betriebes, insbesondere bei einem Wechsel der Gasart, zu ermöglichen, sind die Luftregeneratoren (15, 16) mittels einer Führungswand getrennt und an separate Sohlkanäle angeschlossen. Die eine Regeneratorseite (15) versorgt die Bodenaustritte (6) im Heizzug mit Verbrennungsluft, der andere Regenerator (16) die oberen Binderaustrittsöffnungen (5). Die Beaufschlagung der Austrittsöffnungen (6) an der Heizzugsohle einerseits und der oberen Austrittsöffnungen (5) andererseits kann dadurch außerhalb des Ofens eingestellt und bei einem Wechsel der Gasart umgestellt werden.

Die in den aufziehenden Heizzügen (3) erzeugten Abgase treten durch Öffnungen oben in den Binderwänden jeweils in den abziehenden Nachbarheizzug (3a) über und werden über die Öffnungen (5) und die Hohlbinderkanäle (4a) sowie die Bodenöffnungen (6, 7) dieses Heizzuges, ihre Regeneratoren (14 15, 16) und die Sohlkanäle (12) abgeführt.

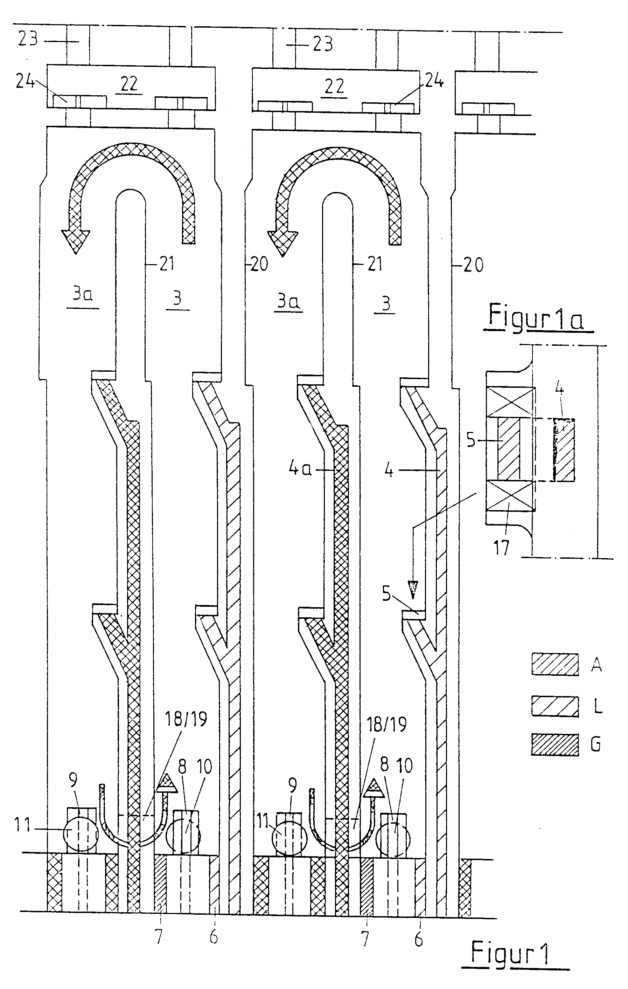

Alle Dosierquerschnitte für Schwachgas bzw. Verbrennungsluft werden nach dem Reheizungswechsel von Abgas durchströmt. Das ergibt für dieses Medium eine analoge Aufteilung auf die Regeneratoren. Diese werden so wieder gleichmäßig aufgeheizt und die Abgase gleichmäßig abgekühlt. Sollte sich eine Veränderung der Verbrennungsluftmengen zwischen den beiden oberen Austrittsöffnungen (5) als notwendig erweisen, so ist dieses durch Ändern der Austrittsöffnungen z. B. mit Hilfe von Schiebersteinen (17) (vgl. Figur 1a) möglich.

Als weitere Maßnahmen neben der stufenweisen Zuführung der Verbrennungsluft sind innere und äußere Rückführungen von Rauchgas zur Minimierung der Stickoxidbildung vorgesehen. Für die innere Rauchgasführung befinden sich unten in jeder zweiten Rinderwand (21) zwei sogenannte Kreisstromöffnungen (18, 19). Obwohl in beiden Heizzügen Auftrieb herrscht, ist dieser im aufziehenden Heizzug (3) größer. Auf diese Weise entsteht am Fuß der Heizzüge ein solches Druckgefälle, daß dort Rauchgase aus dem abziehenden Heizzug (3a) in den aufziehenden Heizzug (3) überströmen.

Um mit der inneren Rauchgasrückführung eine möglichst große Wirkung hinsichtlich der Verringerung der Stickoxidbildung zu erzielen, werden die Starkgasdüsen (8, 9) jeweils vor einer Kreisstromöffnung (18, 19) angeordnet, so daß unterhalb der eigentlichen Verbrennungszone ein Einhüllen bzw. Vermischen des Koksofengases mit zurückgeführtem Abgas erfolgen kann. Die Kreisstromöffnungen (18, 19) können bei Bedarf mittels auf der Heizzugsohle vorhandener Einstellrollen (10, 11) verschlossen werden.

Zur äußeren Rauchgasrückführung wird die Rückführung vergleichsweise kalter Rauchgase aus dem Schornsteinkanal und deren Zumischung zur Verbrennungsluft vorgesehen, wodurch auch die zugemischten Rauchgase in den Regeneratoren auf die Vorwärmtemperatur, die etwas unterhalb der Heizzugtemperatur liegt, erhitzt werden. Die Rückführung der Rauchgase erfolgt mittels Ventilator, wobei die Abgase über umschaltbare Leitungen jeweils aus einem der Schornsteinkanäle zweier benachbarter Batterien entnommen werden.

Da während der periodischen Beheizungsumstellung der Batterie keine Abgase produziert werden, wird die Absaugung vorher auf den Schornsteinkanal der jeweils anderen Batterie umgeschaltet. Anschließend werden die Abgase der Verbrennungsluft zugemischt, die aus diesem Grunde ebenfalls mittels Ventilator angesaugt und über Leitungen oder Kanäle den Batterien zugeführt wird. Durch die Zwangszuführung der rückgeführten Abgase mit der Verbrennungsluft ist es zusätzlich möglich, oberhalb der Koksofentüren abgesaugte und gefilterte Leckgase als Verbrennungsluft zu verwenden. Durch die Zuführung der Verbrennungsluft unter Druck über Leitungen und Hähne sind Vorteile hinsichtlich der exakten Regelbarkeit der Gesamtmenge und Dosierung der Einzelströme zu erwarten.

Insgesamt ergibt sich, unter anderem bedingt durch die exakte Regelbarkeit der Luftmenge, die Möglichkeit einer genauen Temperaturführung in den Heizzügen sowie einer genauen Einstellung der Luftzahl an den einzelnen Verbrennungsstufen, wodurch eine Stickoxidminderung erwartet werden kann.

Aus Figur 1 ist zusätzlich die abwechselnde Anordnung von durchgehenden Binderwänden (20), die zwei Zwillingszuggruppen voneinander trennen, und kurzen Binderwänden (21) ersichtlich. Oberhalb einer Zwillingszuggruppe befindet sich ein Differentialkanal (22), der bei Öffnen der Schieber (24) zur zusätzlichen Beheizung eines höheren Ofenbereiches beaufschlagt werden kann. Oberhalb eines jeden Heizuges befindet sich unter anderem zur Überwachung der Temperaturen in den Heizzügen und Einstellung der Schiebersteine (17) bzw. Einstellrollen (10, 11) die Schauöffnung (23).

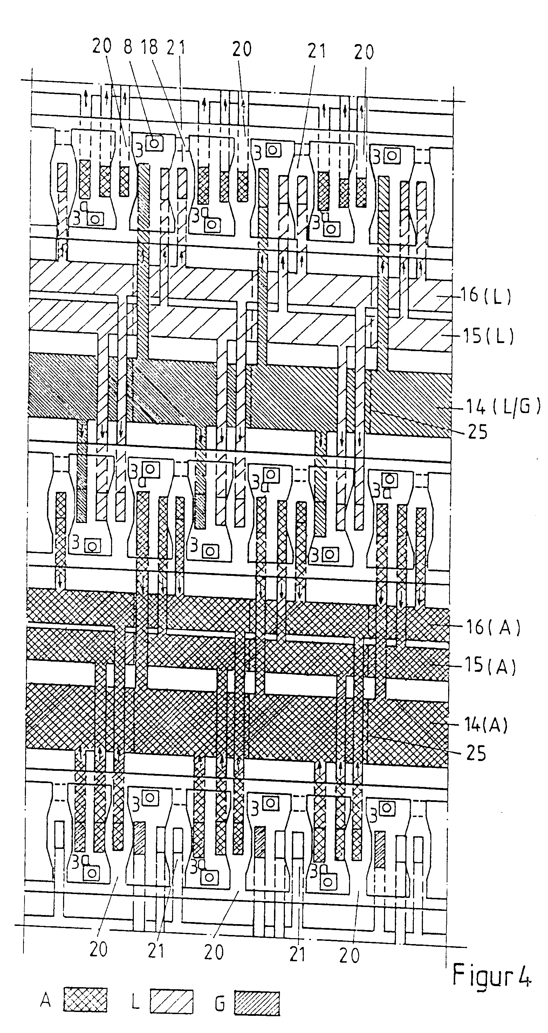

In Figur 4 sind noch die gestrichelt dargestellten Regenereratorzellenwände (25) zu erwähnen.

### Bezugszeichenliste

- (1): Ofenkammer
- (2): Läuferwände
- (3): Heizzüge, aufziehend
- (3a): Heizzüge, abziehend
- (4): Hohlbinderkanäle, aufziehend
- (4a): Hohlbinderkanäle, abziehend
- (5): obere Austrittsöffnungen für (L)
- (6): Austrittsöffnungen an der Heizzugsohle für (L)
- (7): Austrittsöffnungen an der Heizzugsohle für (L) oder (G)
- (8, 9): Starkgasdüsen
- (10, 11): Einstellrollen
- (12): Regeneratorsohlkanal
- (13): Regulierbleche
- (14): Regenerator für (L) (bzw. A) oder (G) (bzw. A)
- (15, 16): Regenerator für (L) (bzw. A)
- (17): Schiebestein
- (18, 19): Kreisstromöffnungen
- (20): durchgehende Binderwand
- (21): kurze Binderwand
- (22): Differentialkanal
- (23): Schauöffnung
- (24): Schieberstein
- (25): Regenerator-Zellenwände
- (A): Abgas, Rauchgas
- (G): Schwachgas, Mischgas
- (L): Luft

## Patentansprüche

1. Beheizungssystem für mit Stark- und/oder Schwachgas bzw. Mischgas beheizbare Regenerativverkokungsofenbatterien mit paarweise zusammenarbeitenden senkrechten Heizzügen (3, 3a), die mit Regeneratoren zur Vorwärmung der Luft (15, 16) bzw. bei Schwachgasbetrieb auch des Schwachgases bzw. Mischgases (14) in Verbindung stehen, hoch- und tiefliegenden Verbrennungsstufen sowie einer inneren Rauchgasrückführung in Höhen der Heizzugsohle, **gekennzeichnet durch** die Kombination folgender Merkmale:
a) zur Zuführung der Verbrennungsluft sind in jedem Heizzug (3) Austrittsöffnungen (5, 6, 7) in mindestens drei Höhenstufen angeordnet, wobei eine Austrittsöffnung (6, 7) an der Heizzugsohle direkt und die darüber angeordneten Austrittsöffnungen (5) über in den Binderwänden angeordnete Hohlbinderkanäle (4) oder separate Kanäle an die Regeneratoren (14, 15, 16) angeschlossen sind;
b) in jeder Binderwand ist ein Hohlbinderkanal (4, 4a) mit nur zu einem benachbarten Heizzug führenden Austrittöffnungen (5) angeordnet;
c) die Regeneratoren (15, 16) zur Vorwärmung von Luft sind in Ofenlängsrichtung geteilt, wobei ein Teil mit den Austrittsöffnungen (6) an der Heizzugsohle, der andere Teil mit den Hohlbinderkanälen (4) oder separaten Kanälen in Verbindung steht und die Luftmengen für beide Teile von außen getrennt einstellbar sind;
d) zur Einstellung der Luftverteilung sind die Austrittsöffnungen (5) oberhalb der Heizzugsohle mit von außen einstellbaren Schiebersteinen (17) ausgerüstet und
e) zur inneren Rauchgasführung sind am Heizzugfuß in der Hohlbinderwand zwischen den auf- und abbrennenden Heizzügen (3, 3a) verschließbare Öffnungen (Kreisstromöffnungen) (18, 19) angeordnet.

2. Beheizungssystem nach Anspruch 1, **dadurch gekennzeichnet**, daß außerhalb des Ofenblocks Einrichtungen zur externen Rauchgasrückführung zu den Zuführungseinrichtungen von mindestens einem der Verbrennungsmedien angeordnet sind.

3. Beheizungssystem nach Anspruch 1 oder 2, **dadurch gekennzeichnet**, daß die während einer Beheizungsperiode beaufschlagten Starkgasdüsen (8) in Ofenlängsrichtung in einer Ebene in der Nähe der einen Läuferwand vor den zugehörigen Kreisstromöffnungen (18) und die während der anderen Beheizungsperiode beaufschlagten Starkgasdüsen (9) ebenfalls in Ofenlängsrichtung in einer Ebene in der Nähe der anderen Läuferwand vor den zugehörigen Kreisstromöffnungen (19) angeordnet sind.

4. Beheizungssystem nach Anspruch 1 oder 2, **dadurch gekennzeichnet**, daß zur Zuführung des Schwachgases bzw. Mischgases (G) in jedem Heizzug eine Austrittsöffnung (7) an der Heizzugsohle angeordnet ist, die an einen Schwachgas bzw. Mischgas führenden Regenerator (14) angeschlossen ist.

5. Beheizungssystem nach Anspruch 1 oder 4, **dadurch gekennzeichnet**, daß die Austrittsöffnungen (6, 7) an der Heizzugsohle in der Mitte zwischen den beiden zugehörigen Läuferwänden (2) angeordnet sind.

6. Beheizungseinrichtung nach Anspruch 1, **dadurch gekennzeichnet**, daß die Kreisstromöffnungen (18, 19) in der Binderwand (21) angeordnet sind, die sich zwischen den paarweise zusammenarbeitenden, auf- und abbrennenden Heizzügen befinden.

7. Beheizungseinrichtung nach mindestens einem der vorhergehenden Ansprüche, **dadurch gekennzeichnet**, daß zur Einstellung der Verbrennungsmedien unter den Regeneratoren (14 - 16) bzw. oberhalb der Regeneratorsohlkanäle (12) einstellbare und/oder auswechselbare Regulierbleche (13) angeordnet sind.

8. Beheizungseinrichtung nach mindestens einem der vorhergehenden Ansprüche, **dadurch gekennzeichnet**, daß die einzelnen Regeneratoren (14 - 16) durch in Batterielängsrichtung verlaufende Zellenwände (25) in Abschnitte unterteilt sind, die mit jeweils einem Heizzug in den beiden benachbarten Heizwänden verbunden sind.

## Claims

1. A heating system for regenerative coke oven batteries that can be heated with rich gas and/or lean gas and/or mixed gas, equipped with vertical heating flues working together in pairs (3, 3a) connected with regenerators to prewarm air (15, 16) and/or lean gas and/or mixed gas in lean gas operation, and equipped with combustion stages at elevated or low positions as well as an inner flue gas recycling at the elevations of a heating flue sole, **characterized** by the combination of the following features:
a) Outlet ports (5,6,7) located at least at three elevations, with one outlet port (6,7) at heating flue sole being connected directly to the regenerators and those outlet ports located thereabove being connected through hollow binder ducts (4) arranged in binder walls or separate ducts to the regenerators (14,15, 16);
b) a hollow binder duct (4, 4a) with outlet ports (5) leading only to one adjacent heating flue is arranged in each binder wall;
c) regenerators (15, 16) for prewarming of air are divided in oven longitudinal direction, with one part thereof standing in connection to the outlet ports (6) at heating flue sole, and the other part thereof being connected to the hollow binder ducts (4) or separate ducts and with the air volumes for both parts being adjustable separately from outside;
d) for adjustment of air distribution, said outlet ports (5) above the heating flue sole are equipped with slide bricks (17) adjustable from outside and
e) for inner flue gas ducting, lockable ports (circular flow ports) (18,19) are located at the heating flue foot in the hollow binder wall between the up-burning and down-burning heating flues (3, 3a).

2. A heating system according to Claim 1, **characterized in that** facilities for external flue gas recycling to the feeder facilities of at least one of the combustion media are arranged outside the oven block.

3. A heating system according to Claim 1 or 2, **characterized in that** the rich gas nozzles (8) charged during a heating period are arranged in oven longitudinal direction in one plane near the one liner brick wall upstream of the pertaining circular flow ports (18) and that those rich gas nozzles charged during the other heating period are also arranged in oven longitudinal direction in one plane near the other liner brick wall upstream of the pertaining circular flow ports (19).

4. A heating sytem according to Claim 1 or 2, **characterized in that** for supply of lean gas and/or mixed gas (G) an outlet port (7) is arranged at heating flue sole in each heating flue with said outlet port being connected to a regenerator carrying lean gas and/or mixed gas.

5. A heating system according to Claim 1 or 4, **characterized in that** the outlet ports (6,7) are arranged at heating flue sole in the middle between the two pertaining liner brick walls (2).

6. A heating system according to Claim 1, **characterized in that** the circular flow ports (18, 19) are arranged in the binder wall (21) located between the up-burning and down-burning heating flues working together in pairs.

7. A heating facility according to at least one of the preceding claims, **characterized in that** adjustable and/or replaceable finger bars (13) are located under regenerators (14 - 16) and/or above the regenerator sole flues (12) for adjustment of combustion media.

8. A heating facility according to at least one of the preceding claims, **characterized in that** the individual regenerators (14 - 16) are subdivided by partition walls extending in battery longitudinal direction into sections which are each connected with one heating flue in two neighbouring heating walls.

## Revendications

1. Système de chauffage pour batteries de fours à régénération à chambres chauffables au gaz riche et/ou au gaz pauvre ou mixte avec carneaux verticaux travaillant par paire (3, 3a) et reliés à des régénérateurs pour le préchauffage de l'air (15, 16) ou également du gaz pauvre ou mixte (14) dans le cas d'un chauffage au gaz pauvre et étages de combustion aménagés en haut et en bas ainsi qu'une récupération interne des fumées au niveau de la sole des carneaux **caractérisé par** la combinaison des caractéristiques suivantes:
a) pour l'amenée de l'air de combustion, des orifices de sortie (5, 6, 7) sont ordonnés dans chaque carneau de chauffe (3) à au moins trois hauteurs, un orifice de sortie (6, 7) étant relié directement à la sole du carneau de chauffe et les orifices ordonnés au-dessus (5) étant reliés aux régénérateurs (14, 15, 16) par l'intermédiaire de canaux en boutisse creuse (4) ordonnés dans les parois en boutisse ou de canaux séparés;
b) dans chaque paroi en boutisse est ordonné un canal en boutisse creuse (4, 4a) avec un orifice de sortie (5) allant seulement à un carneau voisin;
c) les régénérateurs (15, 16) destinés au préchauffage de l'air sont partagés dans le sens longitudinal des fours, une partie étant reliée aux orifices de sortie (6) de la sole des carneaux, l'autre partie étant reliée aux canaux en boutisse creuse (4) ou à des canaux séparés et les quantités d'air pouvant être réglées de l'extérieur séparément pour chaque partie;
d) pour le réglage de la répartition de l'air, les orifices de sortie (5) au-dessus de la sole des carneaux sont équipés de briques-registres (17) réglables de l'extérieur et
e) pour la conduite interne des fumées, des orifices fermants (orifices de circulation) (18, 19) sont ordonnés au pied du carneau dans la paroi en boutisse creuse entre les carneaux ascendants et les carneaux descendants (3, 3a)

2. Système de chauffage selon revendication 1 **caractérisé par le fait** que des installations pour le renvoi externe des fumées vers les installations d'amenée d'au moins un des fluides de combustion sont ordonnées à l'extérieur du bloc de fours.

3. Système de chauffage selon revendication 1 ou 2 **caractérisé par le fait** que les tuyères à gaz riche (8) alimentées pendant une période de chauffage sont ordonnées dans le sens longitudinal des fours à un niveau à proximité de l'une des parois en boutisse devant les orifices de circulation correspondants (18) et que les tuyères à gaz riche (9) alimentées pendant l'autre période de chauffage sont ordonnées également dans le sens longitudinal des fours à un niveau à proximité de l'autre paroi en boutisse devant les orifices de circulation correspondants (19).

4. Système de chauffage selon revendication 1 ou 2 **caractérisé par le fait** que pour l'amenée du gaz pauvre ou mixte (G) un orifice de sortie (7) est aménagé à la sole de chaque carneau de chauffe, laquelle est reliée à un régénérateur (14) amenant du gaz pauvre ou mixte.

5. Système de chauffage selon revendication 1 ou 4 **caractérisé par le fait** que les orifices de sortie (6, 7) de la sole des carneaux sont ordonnés au milieu entre les deux parois en panneresses correspondantes (2).

6. Dispositif de chauffage selon revendication 1 **caractérisé par le fait** que les orifices de circulation (18, 19) sont ordonnés dans la paroi en boutisse (21) se trouvant entre les carneaux de chauffe ascendants et descendants travaillant par paire.

7. Dispositif de chauffage selon au moins une des revendications précédentes **caractérisé par le fait** que des plaques métalliques de régulation (13) sont ordonnées sous les régénérateurs (14 - 16) ou au-dessus des canaux de sole des régénérateurs (12) pour le réglage des fluides de combustion.

8. Dispositif de chauffage selon au moins une des revendications précédentes **caractérisé par le fait** que les régénérateurs individuels (14-16) sont séparés par des parois cellulaires (25) disposées dans le sens longitudinal de la batterie en sections qui sont reliées respectivement à un carneau de chauffe dans les deux piédroits voisins.
